# EUROPÄISCHE PATENTANMELDUNG

(11) **EP 0 814 096 A1**
(43) Veröffentlichungstag der Anmeldung: **29.12.1997**
(21) Anmeldenummer: 97109880.1
(22) Anmeldetag: 17.06.1997
(51) Int. Cl.: C08F 2/22, C09D 157/00

(54) **Verfahren zur Herstellung niedrigviskoser, wässriger Polymerisatdispersionen mit Polymervolumenkonzentrationen von wenigstens 50 vol.-%**

(30) Priorität: 18.06.1996 DE 19624281
(71) Anmelder: BASF AKTIENGESELLSCHAFT, 67056 Ludwigshafen (DE)
(72) Erfinder: Keller, Peter, Dr., 69493 Hirschberg (DE); Meister, Martin, Dr., 67434 Neustadt (DE); Schackert, Werner, 67105 Schifferstadt (DE); Stanger, Bernd, Dr., 67373 Dudenhofen (DE)
(74) Vertreter: Kinzebach, Werner, Dr.

(57) **Zusammenfassung**

Die vorliegende Erfindung betrifft ein Verfahren zur Herstellung niedrigviskoser, wässriger Polymerisatdispersionen mit Polymervolumenkonzentrationen von wenigstens 50 Volumen-% und Viskositäten unterhalb 1000 mPa.s. Die vorliegende Erfindung betrifft auch die durch dieses Verfahren erhältlichen Polymerisatdispersionen.

## Beschreibung

Die vorliegende Erfindung betrifft ein Verfahren zur Herstellung niedrigviskoser, wässriger Polymerisatdispersionen mit Polymervolumenkonzentrationen von wenigstens 50 Vol.-%, bezogen auf die Polymerisatdispersion, und Viskositäten unterhalb 1000 mPa.s.

Wässrige Polymerisatdispersionen finden aufgrund ihrer Eigenschaft, beim Verdampfen des wässrigen Dispersionsmediums Polymerisatfilme zu bilden, in vielfacher Weise Verwendung, beispielsweise als Bindemittel für Anstrichfarben, als Beschichtungsmassen für Leder und Papier, Ausrüstungen für Gewebe oder als Klebefilme.

Hochkonzentrierte wässrige Polymerisatdispersionen sind von Vorteil, da der Aufwand für das Verdampfen des wässrigen Dispergiermediums bei der Filmbildung oder bei der Herstellung von Polymerpulvern reduziert und andererseits eine geringere Transport- und Lagerkapazität erforderlich ist.

Von Nachteil ist jedoch, daß mit zunehmendem Polymergehalt die Viskosität der Polymerisatdispersionen zunimmt. Dies führt zu Problemen bei der Herstellung (Abführung der Reaktionswärme) als auch bei der Verarbeitung. Darüber hinaus gelingt es bei der Herstellung von Polymerisatdispersionen mit hohem Polymergehalt in der Regel nicht, die Viskositäten der jeweiligen Dispersion reproduzierbar einzustellen. Schwankungen um den Faktor 10 und mehr werden häufig beobachtet. Für die meisten Anwendungen ist es daher erforderlich, die Polymerdispersionen abzumischen, was zu hohen zusätzlichen Kosten führt. Weiterhin neigen solch hochkonzentrierte Polymerisatdispersionen zur Mikrokoagulation (Stippenbildung). Mikrokoagulate (Stippen) lassen sich aufgrund ihrer geringen Größe (< 40 µm) nur mit hohem Aufwand aus den Polymerisatdispersionen entfernen und führen insbesondere zu Störungen bei der Verfilmung der wässrigen Polymerisatdispersionen. In diesem Zusammenhang empfiehlt sich die Angabe des Polymergehaltes in Volumenteilen (Vol.-% = Gew.-% geteilt durch Dichte des Polymers), da die genannten Effekte auf die Packung der Polymerisatteilchen in der Polymerisatdispersion zurückzuführen sind.

Es hat sich gezeigt, daß Polymerisatdispersionen mit einer polymodalen oder breiten Größenverteilung der dispergierten Polymerisatteilchen (polydisperse Polymerisate) bei gleichem Feststoffgehalt in der Regel eine geringere Viskosität aufweisen als solche mit einer engen Größenverteilung (monodispers).

Verschiedentlich wurde erkannt, daß ein Zusatz von mit Wasser mischbaren, organischen Lösungsmitteln zur Polymerisationsreaktion sich vorteilhaft auf die Reaktion und die Stabilität der erhaltenen Dispersionen auswirkt. So beschreibt die DE-A 12 47 659 ein Verfahren zur Polymerisation ethylenisch ungesättigter Monomere in wässriger Emulsion, wobei zur Verbesserung der Löslichkeit der Monomere 5 bis 50 Gew.-%, bezogen auf den Wasseranteil der Emulsion, ein mit Wasser mischbares, organisches Lösungsmittel zum Reaktionsansatz gegeben wird. Hierbei werden stabile Dispersionen erhalten. Es ist jedoch anzunehmen, daß die Viskosität der so erhaltenen Polymerisatdispersionen aufgrund der geringen Größe der Polymerisatteilchen (etwa 100 nm) vergleichsweise hoch ist. Zudem werden gemäß den Beispielen nur Dispersionen mit Polymergehalten < 50 Gew.-% erhalten.

Die DE-A 32 42 486 beschreibt ein Verfahren zur Herstellung konzentrierter Polymerisatdispersionen auf Basis von Polyvinylacetat mit Feststoffgehalten von bis zu 60 Gew.-% durch Emulsionspolymerisation. Hierbei können geringe Mengen (< 5 Gew.- %, bezogen auf die fertige Dispersion) Alkohole, wie Ethanol, Propanol, Butanol oder Hexanol dem Reaktionsansatz zugesetzt werden. Die Viskosität der erhaltenen Polymerisatdispersionen liegt jedoch oberhalb 2000 mPa.s und ist daher für viele praktische Anwendungen zu hoch.

Die US-A 3,321,431 beschreibt ein Verfahren zur Herstellung amidreicher Polymerisatdispersionen durch Emulsionspolymerisation. Damit eine Homopolymerisation der Amidmonomere in wässriger Phase unterbunden wird, gibt man hier zur Verbesserung der Löslichkeit der übrigen Monomere dem Reaktionsansatz wasserlösliche, organische Lösungsmittel in Mengen von 1 bis 10 Gew.-%, bezogen auf die Monomere, zu. Über die Viskosität der erhaltenen Polymerisatdispersionen finden sich jedoch keine Angaben. Da die Polymerteilchen gemäß den Beispielen jedoch nur eine geringe Größe (Mittelwert < 250 nm) und im wesentlichen monodisperse Größenverteilungen aufweisen, ist von einer hohen Viskosität der erhaltenen Polymerisatdispersionen auszugehen.

Die CH-A 373 184 beschreibt ein Verfahren zur Polymerisation von Vinylestern in Gegenwart eines mit Wasser mischbaren, organischen Lösungsmittels. Auch in diesem Fall wird das Lösungsmittel zur Verbesserung der Löslichkeit der Monomere in der wässrigen Phase verwendet. Die Viskosität von der erhaltenen Polymerisatdispersionen ist jedoch zu hoch (4000 mPa.s).

Überraschenderweise wurde nun gefunden, daß im Falle der Emulsionspolymerisation nach dem Zulaufverfahren durch Zugabe einer geringen Menge von mit Wasser mischbaren Lösungsmitteln zum Polymerisationsansatz Polymerisatdispersionen mit hohen Polymervolumenkonzentrationen erhältlich sind, die mit hoher Reproduzierbarkeit niedrige Viskositäten und einen reduzierten Gehalt an Mikrokoagulaten aufweisen.

Gegenstand der vorliegenden Erfindung ist daher ein Verfahren zur Herstellung niedrigviskoser, wässriger Polymerisatdispersionen mit Polymervolumenkonzentrationen von wenigstens 50 Vol.%, bezogen auf die Polymerisatdispersion, und Viskositäten unterhalb 1000 mPa.s durch radikalische Emulsionspolymerisation ethylenisch ungesättigter Monomere, ausgenommen Vinyl- und Vinylidenhalogenide, in Gegenwart wenigstens eines Initiators, wobei das Verfahren dadurch gekennzeichnet ist, daß man die Polymerisationsreaktion nach dem Zulaufverfahren in Gegenwart geringer Mengen mindestens eines mit Wasser mischbaren organischen Lösungsmittels durchführt. Außerdem ist das Verfahren weitgehend unabhängig von der Art der verwendeten Monomere. Die Erfindung betrifft auch die durch das erfindungsgemäße Verfahren hergestellten Polymerisatdispersionen.

Die für das erfindungsgemäße Verfahren geeigneten, mit Wasser mischbaren organischen Lösungsmittel sind ausgewählt unter Mono- oder Polyhydroxyverbindungen mit 1 bis 6 Kohlenstoffen wie Methanol, Ethanol, n-Propanol, i-Propanol, n-Butanol, Glykol, 1,2- oder 1,3-Propylenglykol, 1,4-Butandiol, 1,5-Pentandiol, Diethylenglykol, Triethylenglykol, Glycerin, ferner Tetrahydrofuran, 2-Methyltetrahydrofuran, Dioxan, Morpholin-2-on, Pyrrolidon, N-Methylpyrrolidon, Pyrrolidin, Morpholin, Pyridin, Piperidin, Sulfolan, Aceton, Methylethylketon, Formamid, N,N-Dimethylformamid, N,N-Diethylformamid, Acetonitril, Dimethylsulfoxid und Mischungen davon. Besonders bevorzugt wird Aceton, Glykol, 1,2- und/oder 1,3-Propylenglykol verwendet.

Die mit Wasser mischbaren organischen Lösungsmittel werden in geringen Mengen, vorzugsweise in Mengen von 0,05 bis 1 Gew.-%, insbesondere 0,1 bis 0,5 Gew.-%, bezogen auf die zu polymerisierenden Monomere, verwendet.

Vermutlich bewirkt die Anwesenheit des Lösungsmittels in geringer Konzentration eine partielle Aggregation der Polymerisatteilchen, was zu einer stark verbreiterten Verteilung der Polymerisatteilchengrößen führt.

Erfindungsgemäß wird die Emulsionspolymerisation nach dem Zulaufverfahren durchgeführt. Dies bedeutet, daß man die Hauptmenge, d.h. vorzugsweise wenigstens 98 Gew.-%, insbesondere wenigstens 99,5 Gew.-% und besonders bevorzugt nahezu die Gesamtmenge der zu polymerisierenden Monomere, mit Hilfe grenzflächenaktiver Substanzen in Wasser emulgiert und diese Emulsion dem bei Reaktionstemperatur befindlichen Polymerisationsgefäß zudosiert. Die Monomere und die grenzflächenaktiven Substanzen, die in der Regel als wässrige Lösung vorliegen, können auch getrennt dem Reaktor zugeführt werden. Vorzugsweise wird die Hauptmenge des mit Wasser mischbaren organischen Lösungsmittels, insbesondere die Gesamtmenge, im Reaktionsgefäß vorgelegt.

Die Reaktion kann gestartet werden, indem man einen Teil des Initiators in Wasser und gegebenenfalls dem Lösungsmittel, gegebenenfalls zusammen mit einer geringen Menge der Monomere und der grenzflächenaktiven Substanzen, im Reaktionsgefäß vorlegt und anschliessend auf Reaktionstemperatur erwärmt. Vorzugsweise enthält die Vorlage weder Emulgator noch Monomere. Danach werden die Monomere, gegebenenfalls als wässrige Emulsion, kontinuierlich, d.h. mit konstanter Zulaufgeschwindigkeit oder nach der Gradientenfahrweise, der Polymerisationsreaktion zugeführt. Hierbei hat es sich als vorteilhaft erwiesen, daß die Zulaufgeschwindigkeit der Monomere langsam gesteigert wird bis zu einem konstanten Wert, der sich nach dem Reaktionsumsatz richtet und vorzugsweise so gewählt wird, daß wenigstens 80 Gew.-%, vorzugsweise 90 Gew.-%, und insbesondere 95 Gew.-% der im Reaktionsansatz befindlichen Monomere bereits einpolymerisiert sind.

In einer besonders bevorzugten Ausführungsform des erfindungsgemäßen Verfahrens wird nahezu die vollständige Menge an Monomer und Emulgator zu Beginn der Polymerisation mit zunehmender Zulaufrate und anschliessend mit konstanter Zulaufrate dem Polymersationsansatz zugeführt. Hierbei kann man so vorgehen, daß man die Zulaufrate kontinuierlich oder stufenweise bis auf einen gewünschten Wert steigert und anschliessend diesen Wert, der durch Reaktionsumsatz (s.o.) oder andere verfahrensspezifische Parameter, wie Ansatzgröße, Wärmetönung, Durchmischung etc. bestimmt sein kann, beibehält. Hierbei macht die Phase zunehmender Zulaufrate 3 bis 25 %, vorzugsweise 5 bis 15 %, der gesamten Zulaufdauer aus.

Die Art und Weise, wie der Initiator der Emulsionspolymerisation zudosiert wird, ist nicht kritisch. Der Initiator kann sowohl vollständig im Polymerisationsgefäß vorgelegt oder aber nach Maßgabe seines Verbrauchs im Verlauf der Emulsionspolymerisation kontinuierlich oder stufenweise zugesetzt werden. Die Vorgehensweise hängt sowohl von der chemischen Natur des Initiators als auch von der Polymerisationstemperatur ab, und kann vom Fachmann je nach Bedarf gewählt werden.

Polymerisationsdruck und Polymerisationstemperatur sind gleichfalls von untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist ebenfalls möglich, so daß die Polymerisationstemperatur auch 100°C überschreiten und bis zu 130°C betragen kann. Vorzugsweise werden leicht flüchtige Monomere, wie Ethylen oder Butadien, unter erhöhtem Druck polymerisiert.

Mit Hilfe des erfindungsgemäßen Verfahrens lassen sich eine Vielzahl monoethylenisch ungesättigter Monomerer umsetzen. Hierzu zählen C₂-C₆-Olefine, z.B. Ethylen, Propylen, n-Buten, Isobuten, vinylaromatische Monomere, wie Styrol, α-Methylstyrol, o-Chlorstyrol oder Vinyltoluole, C₁-C₁₂-Alkylvinylether, wie Methyl-, Ethyl-, n-Propyl-, i-Propyl-, n-Butyl-, i-Butyl, 2-Ethylhexylvinylether, Vinylester von C₁-C₁₈-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinyllaurat und Vinylstearat. Weiterhin kommen Ester α,β-ethylenisch ungesättigter C₃-C₁₀-Mono- oder Dicarbonsäuren mit C₁-C₁₂-, vorzugsweise C₁-C₈- und insbesondere C₁-C₄-Alkanolen in Frage. Auch können Ester dieser Säuren mit C₅-C₈-Cycloalkanolen verwendet werden. Geeignete C₁-C₁₂-Alkanole sind beispielsweise Methanol, Ethanol, n-Propanol, iso-Propanol, 1-Butanol, 2-Butanol, iso-, tert.-Butanol, n-Hexanol und 2-Ethylhexanol. Geeignete Cycloalkanole sind beispielsweise Cyclopentanol und Cyclohexanol. Geeignet sind insbesondere Ester der Acrylsäure, der Methacrylsäure, der Crotonsäure, der Maleinsäure, der Fumarsäure und der Itaconsäure. Speziell handelt es sich um (Meth)acrylsäuremethylester, (Meth)acrylsäureethylester, (Meth)acrylsäure-n-butylester, (Meth)acrylsäureisobutylester und (Meth)acrylsäure-2-ethylhexylester, Maleinsäuredimethylester oder Maleinsäuredi-n-butylester. Weiterhin kommen Nitrile α,β-monoethylenisch ungesättigter Carbonsäuren, wie Acrylnitril oder Methacrylnitril in Betracht. Darüber hinaus können auch C₄-C₈-konjugierte Diene, wie 1,3-Butadien und Isopren eingesetzt werden. Die genannten Monomere bilden üblicherweise den Hauptanteil und machen vorzugsweise 80 bis 99,9 %, insbesondere 90 bis 99,9 Gew.-% und speziell 95 bis 99,7 Gew.-% der zu polymerisierenden Monomere aus.

Als modifizierende Monomere werden vorzugsweise 0,1 bis 20 Gew.-%, inbesondere 0,1 bis 10 Gew.-% und speziell 0,3 bis 5 Gew.-% Monomere mit einpolymerisiert, deren Homopolymerisate eine erhöhte Wasserlöslichkeit aufweisen. Hierbei handelt es sich beispielsweise um α,β-monoethylenisch ungesättigte Mono- und Dicarbonsäuren mit 3 bis 10 C-Atomen und deren Amide, um Vinyllactame oder um ethylenisch ungesättigte Alkyl- oder Arylsulfonsäuren. Hierzu zählen Acrylsäure, Methacrylsäure, der Crotonsäure, Maleinsäure, Fumarsäure, Itaconsäure, Acrylamid und Methacrylamid, ferner Vinylsulfonsäure, (Meth)acrylamido-2-methylpropansulfonsäure und deren wasserlösliche Salze sowie N-Vinylpyrrolidon. Dabei beträgt die Menge an Amid vorzugsweise bis zu 5 und insbesondere bis zu 2 Gew.-%, bezogen auf die zu polymerisierenden Monomere.

Weiterhin können Monomere einpolymerisiert werden, die die Festigkeit der aus der Polymeremulsion hergestellten Polymerisatfilme erhöhen. Diese werden in untergeordneter Menge, in der Regel bis zu 10 Gew.-%, vorzugsweise bis 5 Gew.-% und insbesondere bis 1 Gew.-%, bezogen auf die Gesamtmenge der zu polymerisierenden Monomere, mit einpolymerisiert. Hierbei handelt es sich um Monomere, die wenigstens eine Epoxy-, Hydroxy-, N-Alkylol- oder eine Carbonylgruppe enthalten. Beispiele hierfür sind die N-Hydroxyalkyl- und N-Alkylolamide der α,β-monoethylenisch ungesättigten Carbonsäuren mit 3 bis 10 C-Atomen wie 2-Hydroxyethyl(meth)acrylamid und N-Methylol(meth)acrylamid, die Hydroxoxyalkylester besagter ethylenisch ungesättigter Carbonsäuren, z.B. Hydroxyethyl-, Hydroxypropyl- und Hydroxybutyl(meth)acrylat, ferner die ethylenisch ungesättigte Glycicylether und -ester, z.B. Vinyl-, Allyl- und Methallylglycicylether, Glycicylacrylat und -methacrylat, die Diacetonylamide der obengenannten ethylenisch ungesättigten Carbonsäuren, z.B. Diacetonyl(meth)acrylamid, und die Ester der Acetylessigsäure mit den obengenannten Hydroxyalkylestern ethylenisch ungesättigter Carbonäuren, z.B. Acetylacetoxyethyl(meth)acrylat. Weiterhin können Verbindungen eingesetzt werden, die zwei nicht-konjugierte, ethylenisch ungesättigte Bindungen aufweisen, z.B. die Diester zweiwertiger Alkohole mit α,β-monoethylenisch ungesättigten C₃-C₁₀-Monocarbonsäuren. Beispiele für derartige Verbindungen sind Alkylenglykoldiacrylate- und -dimethacrylate, wie Ethylenglykoldiacrylat, 1,3-Butylenglykoldiacrylat, 1,4-Butylenglykoldiacrylat, Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Tricyclodecenyl(meth)acrylat, N,N'-Divinylimidazolin-2-on oder Triallylcyanurat.

Das Molekulargewicht der Polymerisate kann durch Zugabe geringer Mengen, in der Regel 0,01 bis 5 Gew.-%, bezogen auf die zu polymerisierenden Monomere, einer oder mehrerer, das Molekulargewicht regelnder Substanzen eingestellt werden. Hierbei handelt es sich beispielsweise um Mercaptoverbindungen, wie Mercaptoethanol, Mercaptopropanol, Mercaptobutanol, Mercaptoessigsäure, Mercaptopropionsäure, Butylmercaptan, tert.-Dodecylmercaptan, Mercaptopropyltrimethoxysilan. Vorzugsweise werden derartige Substanzen im Gemisch mit den zu polymerisierenden Monomeren der Polymerisationsreaktion zugegeben.

Grenzflächenaktive Substanzen, die sich sowohl für die Durchführung der Emulsionspolymerisation als auch für die Herstellung der Monomeremulsion eignen, sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 0,5 bis 3 Gew.-%, bezogen auf die zu polymerisierenden Monomere, eingesetzt.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nicht-ionischer Natur sein. Bei der Verwendung von Gemischen grenzflächenaktiver Substanzen müssen die Einzelkomponenten miteinander verträglich sein, was im Zweifelsfall anhand weniger Vorversuche überprüft werden kann. Gebräuchliche Emulgatoren sind z.B. ethoxylierte Mono-, Di- und Trialkylphenole (EO-Grad: 3 bis 50, Alkylrest: C₄-C₉), Ethoxylate langkettiger Alkanole (EO-Grad: 3 bis 50, Alkylrest: C₈-C₃₆) sowie Alkali- und Ammoniumsalze von Alkylsulfaten (Alkylrest: C₈-C₁₂), von Schwefelsäurehalbestern ethoxylierter Alkanole (EO-Grad: 4 bis 30, Alkylrest: C₁₂ bis C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192-208). Weitere geeignete anionische Emulgatoren sind Bis(phenolsulfonsäure)ether bzw. deren Alkali- oder Ammoniumsalze, die an einem oder beiden aromatischen Ringen eine C₄-C₂₄-Alkylgruppe tragen. Diese Verbindungen sind allgemein bekannt, z.B. aus der US-A 4,269,749, und im Handel erhältlich, beispielsweise als Dowfax®2AI (Warenzeichen der Dow Chemical Company).

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z.B. Alkalimetallperoxodisulfate als auch um Azoverbindungen handeln. Auch können kombinierte Systeme verwendet werden, die aus wenigstens einem organischen Reduktionsmittel und wenigstens einem Peroxid und/oder Hydroperoxid zusammengesetzt sind, z.B. tert.-Butylhydroperoxid mit dem Natriumsalz der Hydroxymethansulfinsäure oder Wasserstoffperoxid mit Ascorbinsäure. Darüber hinaus können kombinierte Systeme verwendet werden, die eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid tert.-Butylhydroperoxid oder Alkaliperoxodisulfate und/oder Ammoniumperoxodisulfat verwendet werden. Vorzugsweise beträgt die Menge der eingesetzten radikalischen Initiatorsysteme, bezogen auf die Gesamtmenge der zu polymerisierenden Monomeren, 0,1 bis 2 Gew.-%.

Im erfindungsgemäßen Verfahren schließt sich zur Verminderung des Restmonomergehaltes der Dispersion an die eigentliche Polymerisationsreaktion in der Regel aber nicht zwingend eine physikalische und/oder chemische Desodorierung an. Aus der EP-A 584 458 ist beispielsweise bekannt, den Restmonomergehalt wässriger Polymerisatdispersionen durch Abstreifen mittels Wasserdampf zu verringern, die EP-A 327 006 empfiehlt die Anwendung konventioneller Destillationsverfahren (physikalische Desodorierung). Die chemische Desodorierung erfolgt vorzugsweise durch eine sich an die Hauptpolymerisation anschließende Nachpolymerisation. Derartige Verfahren sind beispielsweise in der DE-A 38 34 734, der EP-A 379 892, der EP-A 327 006, der DE-A 44 19 518, DE-A 44 35 422 sowie der DE-A 44 35 423 beschrieben.

Das erfindungsgemäße Polymerisationsverfahren eignet sich zur Herstellung von Polymerisatdispersionen mit Polymervolumengehalten von wenigstens 50 Vol.-%, vorzugsweise von wenigstens 65 Vol.-% und insbesondere etwa 70 Vol.-%. Ihre Viskosität beträgt im allgemeinen weniger als 1000 mPa.s, insbesondere weniger als 800 mPa.s und vorzugsweise weniger als 500 mPa.s (bestimmt nach DIN 53019, s.u.). Das Verfahren lässt sich mit zufriedenstellender Reproduzierbarkeit zur Herstellung von Polymerisatdispersionen mit Feststoffvolumenkonzentrationen von bis zu 75 Vol.-% in großtechnisch einfach realisierbarer Weise anwenden. Sie weisen auch dann nur eine geringe Viskosität und keine Neigung zur Bildung von Mikrokoagulaten auf.

Das erfindungsgemäße Verfahren eignet sich vorzugsweise zur Herstellung von Polymerisatdispersionen, die als Hauptbestandteil wenigstens einen der obengenannten Ester der Acrylsäure oder der Methacrylsäure mit C₁-C₁₂-Alkanolen, Styrol oder Butadien einpolymerisiert enthalten. Besonders bevorzugt sind Polymerisate, die 70 bis 100 Gew.-% Ester der Acryl- und/oder der Methacrylsäure mit C₁-C₁₂-Alkanolen, Styrol oder deren Mischungen, oder 70 bis 100 Gew.-% Styrol, Butadien oder deren Mischungen einpolymerisiert enthalten.

Besonders bevorzugt eignet sich das Verfahren zur Herstellung von Polymerisatdispersionen, in denen die Polymerteilchen
- 95 bis 99,7 Gew.-%: wenigstens eines Esters der Acryl- und/oder der Methacrylsäure mit C₁-C₁₂-Alkanolen und
- 0,3 bis 5 Gew.-%: Acrylsäure, Methacrylsäure und/oder Crotonsäure und
- 0 bis 1 Gew.-%: Acrylamid, Methacrylamid und/oder Crotonsäureamid
einpolymerisiert enthalten.

Die erfindungsgemäß erhätlichen Polymerisatdispersionen eignen sich insbesondere als Bindemittel, z.B. für streichfähige Farben oder dünne Klebefilme, zur Ausrüstung von Papier, Leder, Geweben oder Vliesstoffen, oder als Massen zur Herstellung von Beschichtungen und Verklebungen, wobei solche Massen in an sich bekannter Weise zusätzliche Stoffe, wie Hilfsmittel für die Filmbildung, Füllstoffe oder Weichmacher enthalten können.

### BEISPIELE

Bestimmung der Teilchengröße und Teilchenzahl der Polymerisatteilchen in der Polymerisatdispersion.

Die Teilchengrößenverteilung der Polymerisatteilchen wurde mit der sogenannten Coupling-PSD-Technik mittels einer analytischen Ultrazentrifuge bestimmt (siehe W. Mächtle, Angewandte Makromolekulare Chemie, 162 (1988) 35-42 (Nr. 2735)). Auf diese Weise wurde eine nach Massen differenzierte integrale Verteilung der Teilchengrösse erhalten. Der d₅₀-Wert ist dabei als der Teilchendurchmesser definiert, der von 50 Gew.-% der Teilchen über- bzw. unterschritten wird.

Die Konzentration der Polymerisatteilchen in der Polymerisatdispersion wurde ebenfalls mittels einer analytischen Ultrazentrifuge über den gewichtsmittleren Teilchendurchmesser (d₅₀-Wert) nach W. Mächtle, Makromolukulare Chemie 185, (1984) 1025-1039 bestimmt (siehe auch DE-A 42 13 965.1).

Die Viskosität der erhaltenen Polymerisatdispersionen wurde dynamisch bei 25°C nach Contraves (Spindel 2, 25 Umin⁻¹) bestimmt.

### Verfahren zur Herstellung niedrigviskoser, hochkonzentrierter Acrylatdispersionen

### Beispiele 1 bis 5

In einem Polymerisationskessel wurden
- 68,6 kg: entionisiertes Wasser
- 0,4 kg: Ascorbinsäure und Lösungsmittel (siehe Tabelle 1)
vorgelegt. Anschliessend erwärmte man die Vorlage auf 75°C und gab 7,14 Gew.-% von Zulauf II zu. Anschliessend gab man bei 85°C gleichzeitig beginnend, Zulauf I innerhalb von 7 Stunden und Zulauf II innerhalb von 7,5 Stunden zu. Hierbei gestaltete sich die Zugabe von Zulauf I wie folgt:
0 bis 10 min 14 l/h
10 bis 20 min 38 l/h
20 bis 30 min 64 l/h
30 bis 40 min 88 l/h
40 bis 50 min 111 l/h.
Dann 146,5 l/h.

Nach Beendigung von Zulauf II wurde noch eine Stunde bei 85°C nachpolymerisiert. Die Ergebnisse der Polymerisationsreaktionen sind in Tabelle 1 zusammengefasst. Zulauf I
- 100,00 kg: entionisiertes Wasser
- 20,52 kg: 35 gew.-%ige Lösung des Natriumsalzes des Schwefelsäurehalbesters von ethoxyliertem Nonylphenol (Ethoxy lierungsgrad 25)
- 14,40 kg: 2O gew.-%ige Lösung von ethoxyliertem Octylphenol (Ethoxylierungsgrad 25)
- 14,40 kg: 25 gew.-%iges NaOH in Wasser
- 0,36 kg: 50 %ige Acrylamid-Lösung in Wasser
- 13,90 kg: 2-Hydroxyethylacrylat
- 22,09 kg: Methacrylsäure 98 %ig
- 348,00 kg: 2-Ethylhexylacrylat
- 278,40 kg: n-Butylacrylat
- 69,60 kg: Ethylacrylat
- 0,86 kg: 2-Ethylhexylthioglykolat

### Zulauf II

- 66,80 kg: entionisiertes Wasser
- 5,03 kg: Natriumperoxodisulfat

### Beispiel 6

Die Polymerisation wurde wie in den Beispielen 1 bis 5 beschrieben durchgeführt, jedoch wurde 0,25 Gew.-% Aceton, bezogen auf die Monomeren, eingesetzt. Das Ergebnis findet sich in Tabelle 1.

### Beispiele 7 bis 11

Die Polymerisation wurde wie in den Beispielen 1 bis 5 durchgeführt, jedoch gestaltete sich die Zulaufgeschwindigkeit der Monomere wie folgt:
0 bis 10 min 27,2 l/h
10 bis 20 min 76,2 l/h
20 bis 30 min 125,4 l/h
30 bis 40 min 174,4 l/h
Dann 223 l/h.

Die Ergebnisse sind in Tabelle 1 zusammengefasst.

**Tabelle 1**

| Beispiel | Lösungsmittel kg (%)¹⁾ | | Feststoffgehalt Vol.-%²⁾ | Viskosität³⁾ [mPa.s] | d₅₀⁴⁾ (nm) |
|---|---|---|---|---|---|
| 1⁵⁾ | - | 0 | 70,1 | 596 | 433 |
| 2 | PG | 1,80 (0,25) | 70,0 | 434 | 496 |
| 3 | PG | 3,59 (0,5) | 70,0 | 360 | 502 |
| 4 | PG | 5,39 (0,75) | 70,1 | 195 | 477 |
| 5 | PG | 7,18 (1,0) | 69,3 | 112 | 389 |
| 6 | A | 1,80 (0,25) | 69,7 | 181 | 308 |
| 7⁵⁾ | - | 0 | 70,0 | 2500 | n.b. |
| 8 | PG | 1,80 (0,25) | 70,0 | 1000 | n.b. |
| 9 | PG | 3,59 (0,5) | 69,9 | 700 | n.b. |
| 10 | PG | 5,39 (0,75) | 70,0 | 500 | n.b. |
| 11 | PG | 7,18 (1,0) | 69,8 | 450 | n.b. |

| | | | | | |
|---|---|---|---|---|---|
| ¹⁾ bezogen auf die Monomere | | | | | |
| ²⁾ bezogen auf die fertige Dispersion | | | | | |
| ³⁾ Viskosität nach Contraves; Spindel 2, 25 Umin⁻¹, 25°C. | | | | | |
| ⁴⁾ mittlere Teilchengröße der Polymerisatteilchen (d₅₀-Wert) | | | | | |
| ⁵⁾ nicht erfindungsgemäß PG 1,2 Propylenglykol A Aceton n.b.nicht bestimmt | | | | | |

## Patentansprüche

1. Verfahren zur Herstellung niedrigviskoser, wässriger Polymerisatdispersionen mit Polymervolumenkonzentrationen von wenigstens 50 Vol.-%, bezogen auf die Polymerdispersion, und Viskositäten unterhalb 1000 mPa.s durch radikalische Emulsionspolymerisation ethylenisch ungesättigter Monomere, ausgenommen Vinyl- und Vinylidenhalogenide, in Gegenwart wenigstens eines Initiators, dadurch gekennzeichnet, daß man die Polymerisationsreaktion nach dem Zulaufverfahren in Gegenwart geringer Mengen mindestens eines mit Wasser mischbaren organischen Lösungsmittels durchführt.

2. Verfahren nach Anspruch 1, dadurch gekennzeichnet, daß man 0,05 bis 1 Gew.-%, bezogen auf die zu polymerisierenden Monomere, des mit Wasser mischbaren organischen Lösungsmittels verwendet.

3. Verfahren nach einem der vorhergehenden Ansprüche, dadurch gekennzeichnet, daß das mit Wasser mischbare organische Lösungsmittel ausgewählt ist unter Mono- oder Polyhydroxyverbindungen mit 1 bis 6 Kohlenstoffen, Aceton, Methylethylketon, Tetrahydrofuran, 2-Methyltetrahydrofuran, Dioxan, Morpholin-2-on, Pyrrolidon, N-Methylpyrrolidon, Pyrrolidin, Morpholin, Piperidin, Pyridin, Sulfolan, Formamid, N,N-Dimethylformamid, N,N-Diethylformamid, Acetonitril, Dimethylsulfoxid.

4. Verfahren nach einem der vorhergehenden Ansprüche, dadurch gekennzeichnet, daß man als ethylenisch ungesättigte Monomere
80 bis 99,9 Gew.-% wenigstens eines Monomers, das ausgewählt ist unter Estern α,β-ungesättigter C₃-C₁₀-Mono- oder Dicarbonsäuren mit C₁-C₁₂-Alkanolen oder C₅-C₈-Cycloalkanolen, Vinylestern von C₁-C₁₈-Carbonsäuren, C₁-C₁₂-Alkylvinylethern, C₂-C₆-Olefinen, vinylaromatischen Monomeren, konjugierten C₄-C₈-Dienen, (Meth)acrylnitril oder Mischungen davon und
0,1 bis 20 Gew.-% α,β-monoethylenisch ungesättigte Mono- oder Dicarbonsäuren mit 3 bis 10 C-Atomen, deren Amide, Vinylsulfonsäure bzw. deren Salze, N-Vinylpyrrolidon oder Mischungen davon und
0 bis 10 Gew.-% vernetzende Monomere verwendet, wobei die Gewichtsteile jeweils auf die gesamte zu polymerisierende Monomermenge bezogen sind.

5. Verfahren nach Anspruch 4, dadurch gekennzeichnet, daß die ethylenisch ungesättigten Monomere weniger als 5 Gew.-%, bezogen auf die Monomermischung, Amide der Mono- oder Dicarbonsäure mit 3 bis 10 C-Atomen enthalten.

6. Verfahren nach einem der vorhergehenden Ansprüche, dadurch gekennzeichnet, daß man wenigstens 98 Gew.-% der zu polymerisierenden Monomermenge der Polymerisationsreaktion kontinuierlich zuführt.

7. Verfahren nach einem der vorhergehenden Ansprüche, dadurch gekennzeichnet, daß man die Monomeren als wässrige Emulsion zuführt, wobei das Mengenverhältnis Wasser:Monomer im Bereich von 1:1 bis 1:9 liegt.

8. Verfahren nach Anspruch 6, dadurch gekennzeichnet, daß man die Monomeremulsion so zudosiert, daß die Umsatzrate der im Reaktionsansatz befindlichen Monomere wenigstens 80 % beträgt.

9. Verfahren nach einem der vorhergehenden Ansprüche, dadurch gekennzeichnet, daß der Polymervolumengehalt der erhaltenen Polymerisatdispersionen > 65 Vol.-% beträgt.

10. Wässrige Polymerisatdispersionen, erhältlich durch ein Verfahren gemäß einem der Ansprüche 1 bis 9.

11. Wässrige Polymerisatdispersionen nach Anspruch 10, worin die Polymerisatteilchen
70 bis 100 Gew.-% Ester der Acryl- oder der Methacrylsäure mit C₁-C₁₂-Alkanolen, Styrol oder deren Mischungen, oder
70 bis 100 Gew.-% Styrol, Butadien oder deren Mischungen einpolymerisiert enthalten.

12. Wässrige Polymerisatdispersion nach Anspruch 10 oder 11, worin die Polymerteilchen
95 bis 99,7 Gew.-% wenigstens eines Esters der Acryl- und/oder der Methacrylsäure mit C₁-C₁₂-Alkanolen,
0,3 bis 5 Gew.-% Acrylsäure, Methacrylsäure und/oder Crotonsäure, und
0 bis 1 Gew.-% Acrylamid, Methacrylamid und/oder Crotonsäureamid
einpolymerisiert enthalten.

13. Verwendung der wässrigen Polymerisatdispersionen nach einem der Ansprüche 10 bis 12 als Bindemittel für Beschichtungsmassen, Klebemittel und zur Ausrüstung von Papier, Leder, Geweben oder Vliesstoffen.
